# EUROPEAN PATENT APPLICATION

(11) **EP 3 767 655 A1**
(43) Date of publication of application: **20.01.2021**
(21) Application number: 19187462.7
(22) Date of filing: 19.07.2019
(51) Int. Cl.: H01G 11/82

(54) **ASSEMBLY OF CAPACITORS ORGANIZED IN VEAL COLUMNS AND IN SEVERAL ROWS**

(71) Applicant: ABB Schweiz AG, 5400 Baden (CH)
(72) Inventor: Herdzina, Maciej, 31-580 Krakow (PL); Weglarz, Mateusz, 34-460 Szczawnica (PL); Kustra, Jakub, 39-300 Mielec (PL); Laskos, Przemyslaw, 30-733 Krakow (PL); Antoniewicz, Patrycjusz, 30-611 Krakow (PL)
(74) Representative: AOMB Polska Sp. z.o.o.

(57) **Abstract**

Invention relates to an assembly of supercapacitors, with supercapacitor modules organized in vertical columns and in several rows, wherein the supercapacitor modules are interconnected in such a manner, that the assembly can be easily modified, to present different electrical characteristics while retaining the same topology of connections.

## Description

The invention relates to the field of electrical energy storage, in particular to storing energy in capacitors and supercapacitors, that are assembled into compact form that ensures convenient and practical storage units. Such storage units can be later easily assembled into storage plants according to needs, e.g. for tram and railway systems.

There are many energy storage units known in the art, e.g. CN104465075A discloses a storage unit, where set of capacitors is arranged in three horizontal rows, each having nine capacitors. However, this document focuses more on the problem of cooling capacitors and doesn't give much information on other aspects of capacitors' arrangement.

CN205319749U discloses a different approach, where set of capacitors is arranged in four horizontal rows, each row having five capacitors. Furthermore, there are several such sets combined in single housing, wherein each set is installed on a rail, that allows for sliding individual set out of the housing, e.g. for inspection and maintenance. Unfortunately, proposed solution has a drawback of using unnecessarily lot of space, wherein energy storage solutions should be more compact.

The aforementioned documents didn't also take into consideration optimization of connections between capacitors/supercapacitors, which should provide possibly the least amount of cabling. Also, cabling should consider providing convenient places for connecting the set of capacitors/supercapacitors (positive and negative connectors), so that they could be easily attached to the rest of the components of a power storage unit. There is also the need for constant diagnostic of the capacitors, so that their temperature, voltage etc. are monitored. Equipment for such diagnostic is costly to design and manufacture, so there is a need for a layout of capacitors that could use the same diagnostic equipment while giving the possibility for some customization.

The following invention provides a solution to all of the aforementioned problems.

Invention relates to an assembly of supercapacitors, with supercapacitors organized in vertical columns and in several rows, wherein
supercapacitors are assembled into two sets of vertical columns and in several rows, that is right-side set and left-side set, where these sets are arranged on a supporting frame, having front and back, with supercapacitors from one set being situated with their front face with positive and negative connections facing away from supercapacitors from the other set,
each set of supercapacitors comprises twenty supercapacitors arranged into five vertical columns and four rows,
supercapacitors from vertical columns on both sides can be grouped into five consecutive banks, with supercapacitors on both sides from the column that is closest to the front of the support frame constituting bank 1 and supercapacitors on both sides from the column that is closes to the back of the supporting frame constituting bank 5,
each of the bank 1, bank 2, bank 3, bank 4 and bank 5 of supercapacitors is connected to a separate diagnostic equipment,
supercapacitors are connected between each other in series into two separate groups of supercapacitors called strings, wherein
string 1 starts with its' negative terminal on the negative connection of the bottom supercapacitor from bank 1 on the left side, continues upwards through supercapacitors from bank 1 on the left side, further continues by connecting the uppermost supercapacitor from bank 1 on the left side with the uppermost supercapacitor from bank 2 on the left side, continues downwards through supercapacitors from bank 2 on the left side, further continues by connecting the bottom supercapacitor from bank 2 on the left side with the bottom supercapacitor from bank 2 on the right side, continues upwards through supercapacitors from bank 2 on the right side, further continues by connecting the uppermost supercapacitor from bank 2 on the right side with the uppermost supercapacitor from bank 4 on the right side, continues downwards through supercapacitors from bank 4 on the right side, further continues by connecting the bottom supercapacitor from bank 4 on the right side with the bottom supercapacitor from bank 4 on the left side, continues upwards through supercapacitors from bank 4 on the left side, and ends with its' positive terminal on the positive connection of the uppermost supercapacitor from bank 4 on the left side,
string 2 starts with its' negative terminal on the negative connection of the bottom supercapacitor from bank 1 on the right side, continues upwards through supercapacitors from bank 1 on the right side, further continues by connecting the uppermost supercapacitor from bank 1 on the right side with the uppermost supercapacitor from bank 3 on the right side, continues downwards through supercapacitors from bank 3 on the right side, further continues by connecting the bottom supercapacitor from bank 3 on the right side with the bottom supercapacitor from bank 3 on the left side, continues upwards through supercapacitors from bank 3 on the left side, further continues by connecting the uppermost supercapacitor from bank 3 on the left side with the uppermost supercapacitor from bank 5 on the left side, continues downwards through supercapacitors from bank 5 on the left side, further continues by connecting the bottom supercapacitor from bank 5 on the left side with the bottom supercapacitor from bank 5 on the right side, continues upwards through supercapacitors from bank 5 on the right side, and ends with its' positive terminal on the positive connection of the uppermost supercapacitor from bank 5 on the right side,
wherein both strings are connected in parallel.

The invention also relates to an assembly of supercapacitors, with supercapacitors organized in vertical columns and in several rows, wherein
supercapacitors are assembled into two sets of vertical columns and in several rows, that is right-side set and left-side set, where these sets are arranged on a supporting frame, having front and back, with supercapacitors from one set being situated with their front face with positive and negative connections facing away from supercapacitors from the other set,
each set of supercapacitors comprises twenty supercapacitors arranged into five vertical columns and four rows,
supercapacitors from vertical columns on both sides can be grouped into five consecutive banks, with supercapacitors on both sides from the column that is closest to the front of the support frame constituting bank 1 and supercapacitors on both sides from the column that is closes to the back of the supporting frame constituting bank 5,
each of the bank 1, bank 2, bank 3, bank 4 and bank 5 of supercapacitors is connected to a separate diagnostic equipment,
supercapacitors are connected between each other in series into two separate groups of supercapacitors called strings, wherein
string 1 starts with its' negative terminal on the negative connection of the bottom supercapacitor from bank 5 on the right side, continues upwards through supercapacitors from bank 5 on the right side, further continues by connecting the uppermost supercapacitor from bank 5 on the right side with the uppermost supercapacitor from bank 4 on the right side, continues downwards through supercapacitors from bank 4 on the right side, further continues by connecting the bottom supercapacitor from bank 4 on the right side with the bottom supercapacitor from bank 4 on the left side, continues upwards through supercapacitors from bank 4 on the left side, further continues by connecting the uppermost supercapacitor from bank 4 on the left side with the uppermost supercapacitor from bank 2 on the left side, continues downwards through supercapacitors from bank 2 on the left side, further continues by connecting the bottom supercapacitor from bank 2 on the left side with the bottom supercapacitor from bank 2 on the right side, continues upwards through supercapacitors from bank 2 on the right side, and ends with its' positive terminal on the positive connection of the uppermost supercapacitor from bank 2 on the right side,
string 2 starts with its' negative terminal on the negative connection of the bottom supercapacitor from bank 5 on the left side, continues upwards through supercapacitors from bank 5 on the left side, further continues by connecting the uppermost supercapacitor from bank 5 on the left side with the uppermost supercapacitor from bank 3 on the left side, continues downwards through supercapacitors from bank 3 on the left side, further continues by connecting the bottom supercapacitor from bank 3 on the left side with the bottom supercapacitor from bank 3 on the right side, continues upwards through supercapacitors from bank 3 on the right side, further continues by connecting the uppermost supercapacitor from bank 3 on the right side with the uppermost supercapacitor from bank 1 on the right side, continues downwards through supercapacitors from bank 1 on the right side, further continues by connecting the bottom supercapacitor from bank 1 on the right side with the bottom supercapacitor from bank 1 on the left side, continues upwards through supercapacitors from bank 1 on the left side, and ends with its' positive terminal on the positive connection of the uppermost supercapacitor from bank 1 on the left side,
wherein both strings are connected in parallel.

Preferably, each of the supercapacitors works with voltage around 40V, 50V, 70V, 90V, 105V, 120V or 145V, e.g. 48V.

Preferably, total energy stored by supercapacitors is around 7MJ.

Invention also relates to an energy storage unit comprising assembly of supercapacitors, assembled in the manner presented by the invention.

Whenever in the description there is used a term 'capacitor', it should be understood that it can be both capacitor and supercapacitor. Furthermore, despite using terms 'capacitor' or 'supercapacitor' it is obvious for a person skilled in the art, that it can also mean 'capacitor module' or 'supercapacitor module', which are groups of connected capacitors or supercapacitors inside a single housing. Therefore, terms 'capacitor' and 'supercapacitor' are hereby used just to indicate objects that can store electrical energy and can be charged/discharged in relatively short period of time.

Whenever in the description there is used a term 'about', 'around' or 'more or less' with regard to a value specified by a number, it should be understood as a range of +/- 25% from the specified value.

The invention will be now described in greater detail in preferred embodiments with relation to attached figures, where:
Fig. 1 presents schematic division of capacitors from single storage unit into two strings 1 and 2 according to first embodiment,
Fig. 2 presents schematic division of capacitors from Fig. 1 with individual capacitors shown according to first embodiment,
Fig. 3 presents exemplary view on both sides of single storage unit and the arrangement of capacitors into columns,
Fig. 4 presents connections between the capacitors according to the first embodiment,
Fig. 5 presents schematic division of capacitors with individual capacitors shown according to the second embodiment, and
Fig. 6 present connection between the capacitors according to the second embodiment.

### Preferred embodiments of the invention

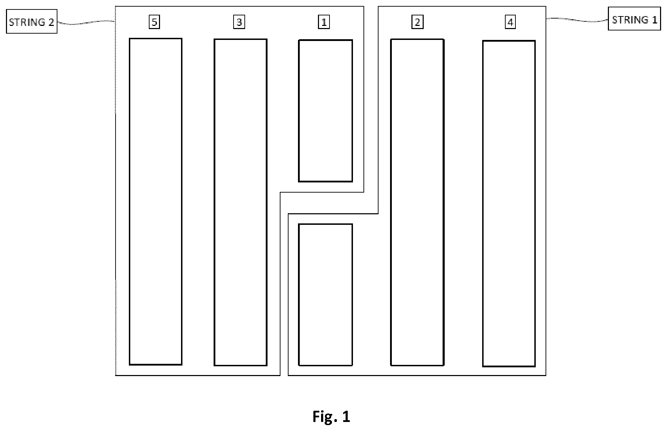

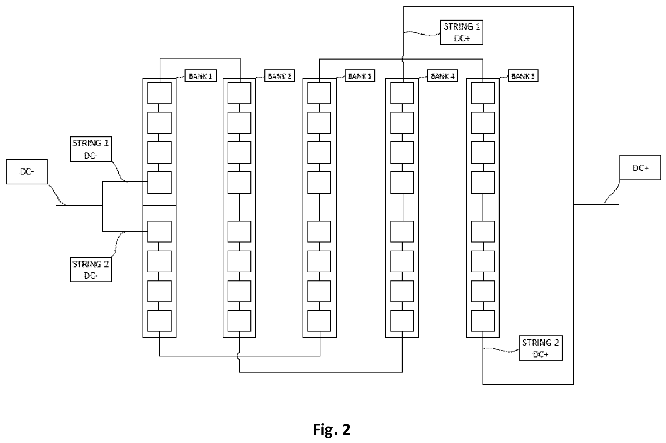

Presented on Fig. 1 there is a schematic division of capacitors from a single storage unit into two 'strings'. By comparing Fig. 1 and Fig. 2 it can be seen, that each of the strings connects twenty capacitors together.

On the Figs 1 and 2 there is also visible a division of capacitors into 'banks' numbered from 1 to 5. These banks comprise capacitors from a single vertical column and from both sides of the single storage unit, meaning a single bank comprises eight capacitors. Each bank is connected to a diagnostic unit that monitors status of the capacitors.

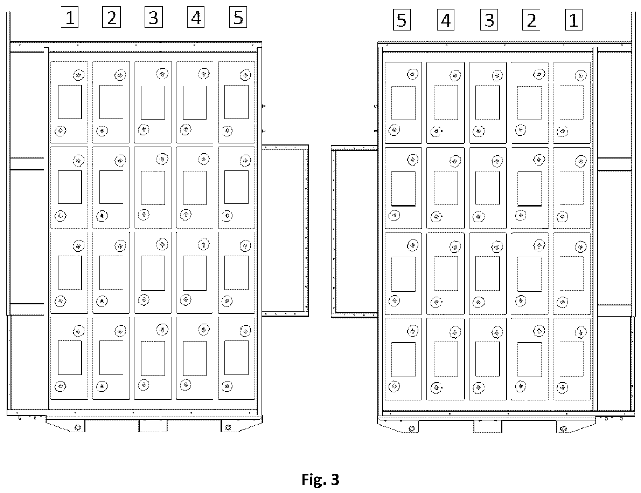

Fig. 3 presents side views of first embodiment of a single storage unit from both sides, where bank 1 is located near the front of the single storage unit (far right and far left sides of Fig. 3), with banks 2, 3 and 4 following and bank 5 located near the back of the single storage unit (center of Fig. 3). Capacitors are shown as rectangular 'blocks' with visible circular negative and positive connections.

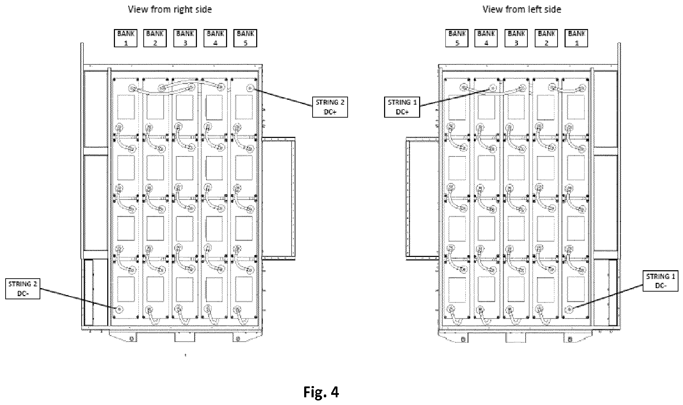

By comparing Figs 1, 2 and 4 it can be seen, that in this embodiment the capacitors are connected in series (by connecting negative and positive connections of adjacent capacitors), in such a manner, that string 2 has it's negative end on negative connection of capacitor from bank 1 which is on the bottom of the single storage unit and on the right side of the single storage unit (visible on the left side of Fig. 4). Starting from this negative end, the capacitor is connected in series with the other three capacitors from bank 1 that are located above it, afterwards being connected to the capacitor from bank 3 (which is uppermost, see Fig. 4). From there, the string 2 continues by connecting in series capacitors from bank 3 from top to the bottom one, which is connected to the bottom capacitor from bank 3 on the other (left) side of the single storage unit (visible on the right side of Fig. 4), afterwards connecting four capacitors on the left side of the single storage unit from bottom to the top, wherein the uppermost capacitor from bank 3 on the left side of the single storage unit (right side of Fig. 4) is connected to the uppermost capacitor of the bank 5 of the single storage unit. From there, string 2 continues by connecting four capacitors from bank 5 on the left side of the single storage unit from the top one to the bottom one, which is connected to the bottom capacitor from bank 5 on the right side of the single storage unit (visible on the left side of Fig. 4). The bottom capacitor from bank 5 on the right side of the single storage unit is in this embodiment connected to the other three capacitors from bank 5 that are located above it, where the uppermost capacitor from bank 5 is not connected to another capacitor by its' positive connection, because its' positive end is the positive end of string 2 of capacitors.

It can be seen, that all capacitors from bank 3 and bank 5 are included in string 2, whereas only capacitors from the right side of the bank 1 are included in string 2, with both negative and positive ends/connections of string 2 being located on the right side of the single storage unit.

Furthermore, by comparing Figs 1, 2 and 4 it can be seen, that in this embodiment the capacitors in series that together form string 1, that string 1 has its' negative end on negative connection of capacitor from bank 1 which is in the bottom of the single storage unit and on the left side of the single storage unit (visible on the right side of Fig. 4). Starting from this negative end, the capacitor is connected in series with the other three capacitors from bank 1 that are located above it, afterwards being connected to the capacitor from bank 2 (which is uppermost, see Fig. 4). From there, the string 1 continues by connecting in series capacitors from bank 2 from top to the bottom one, which is connected to the bottom capacitor from bank 2 on the other (right) side of the single storage unit (visible on the left side of Fig. 4), afterwards connecting four capacitors on the right side of the single storage unit from bottom to the top, wherein the uppermost capacitor from bank 2 on the right side of the single storage unit (left side of Fig. 4) is connected to the uppermost capacitor of the bank 4 of the single storage unit. From there, string 1 continues by connecting four capacitors from bank 4 on the right side of the single storage unit from the top one to the bottom one, which is connected to the bottom capacitor from bank 4 on the left side of the single storage unit (visible on the right side of Fig. 4). The bottom capacitor from bank 4 on the left side of the single storage unit is in this embodiment connected to the other three capacitors from bank 4 that are located above it, where the uppermost capacitor from bank 4 is not connected to another capacitor by its' positive connection, because its' positive end is the positive end of string 1 of capacitors.

It can be seen, that all capacitors from bank 2 and bank 4 are included in string 1, whereas only capacitors from the left side of bank 1 are included in string 1, with both negative and positive ends/connections of string 1 being located on the left side of the single storage unit.

In the first embodiment (described above) both negative ends/connections of string 1 and string 2 are located in bank 1, near the bottom-front of the single storage unit, while both positive ends/connections of string 1 and string 2 are located in bank 4 and 5, respectively, near the top-back of the single storage unit. Such set up (with connections near top or bottom frame of the single storage unit) allows for convenient joining strings of capacitors to other components. Furthermore, the fact that bank 2, bank 3, bank 4 and bank 5 group capacitors that within a respective bank belong to a single string, allows for easier integration with diagnostic equipment, especially for using a single diagnostic board for a single bank. Although capacitors from bank 1 belong in this embodiment to two different strings (string 2 on the right and string 1 on the left side of the single storage unit), these capacitors are located near the negative end of each of the strings, which makes it still possible to utilize relatively inexpensive diagnostic equipment, especially a single diagnostic board.

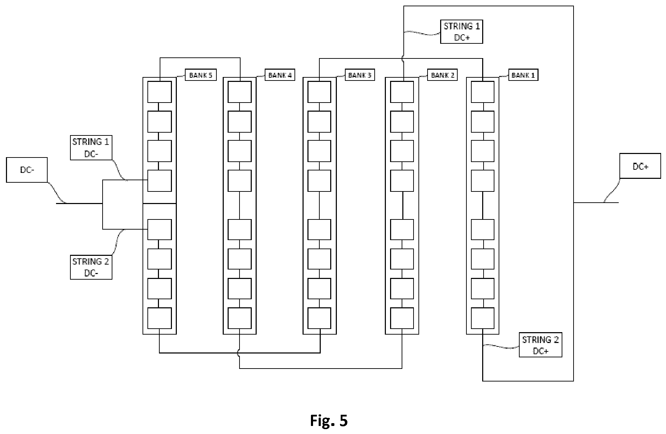

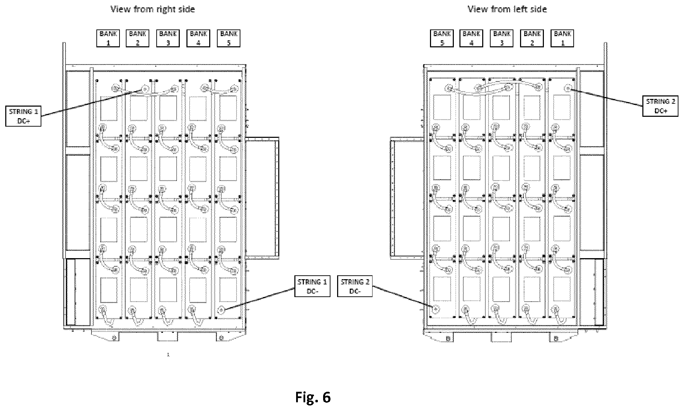

Although the first embodiment described the layout and topology of connections between the capacitors in such a manner, that both negative connections of both strings were located near the front of the single storage unit and positive connections near the back, it should be understood that there is also another (second) possible layout of capacitors and topology of their connections, that presents similar advantages, and which is presented in Fig. 5 and Fig. 6. As can be seen, this is a similar topology to the first embodiment, just flipped vertically.

In this embodiment, string 2 has its' negative connection located on the negative connection of the lowest capacitor of bank 5 on the left side of the single storage unit (right side near the center of Fig. 6), later string 2 continues connecting capacitors from bank 5 upwards on that left side of the single storage unit, then connects to the uppermost capacitor from bank 3 on the left side, continues downward through capacitors from bank 3 on the left side, then joins the bottom capacitor from bank 3 on the left side with the bottom capacitor from bank 3 on the right side of the single storage unit, continues upwards through capacitors from bank 3 on the right side of the single storage unit, later connects uppermost capacitor from bank 3 on the right side with the uppermost capacitor form bank 1 on the right side, continues downwards through capacitors from bank 1 on the right side, connects the bottom capacitor from bank 1 on the right side with the bottom capacitor from bank 1 on the left side of the single storage unit and continues upwards, ending on the uppermost capacitor from bank 1 on the left side of the single storage unit (right side of Fig. 6).

Correspondingly, string 1 in this embodiment has its' negative connection located on the negative connection of the lowest capacitor of bank 5 on the right side of the single storage unit (left side near the center of Fig. 6), later string 1 continues connecting capacitors from bank 5 upwards on that right side of the single storage unit, then connect to the uppermost capacitor from bank 4 on that right side of the single storage unit, continues downwards through capacitors from bank 4 on the right side, then joins the bottom capacitor from bank 4 on the right side with the bottom capacitor from bank 4 on the left side of the single storage unit, continues upwards through capacitors from bank 4 on the left side of the single storage unit, later connects uppermost capacitor from bank 4 on the left side with the uppermost capacitor from bank 2 on the left side, continues downwards through capacitors from bank 2 on the left side, connects the bottom capacitor from bank 2 on the left side with the bottom capacitor from bank 2 on the right side of the single storage unit and continues upwards, ending on the uppermost capacitor from bank 2 on the right side of the single storage unit (left side of Fig. 6).

It can be seen, that despite changes, the topology of the second embodiment is similar to the one from the first embodiment, just flipped vertically, and the connections defining negative and positive terminals of the strings are also located in the vicinity of the frame of the single storage unit (in this embodiment negative connections of strings are near the back and positive connections are near the front of the single storage unit).

Both embodiments represent capacitors layout and topology of their connections, that can be very convenient for customization with different types of capacitors/supercapacitors, such that one general design would be sufficient for different values of voltages and energy stored.

In both embodiments string 1 and string 2 are electrically connected in parallel.

For example, the first embodiment can utilize such supercapacitors, that each single supercapacitor works with voltage of about 48 V. In such case, the total operational voltage of the single storage unit would be around 700 V, and with a total energy stored of around 7 MJ (with energy divided between two strings of supercapacitors).

Regarding constant development and upgrades of supercapacitors, it is obvious for the person skilled in the art, that as long as thermal and electrical insulation is sufficient, such layout and topology of connections are applicable for supercapacitors with different work parameters, e.g. for capacitors that work with voltage of around 50 V, around 70 V, around 90 V, around 105 V, around 120 V or around 145 V. It is also obvious, that changes in work voltage can mean, that there would be more total energy stored in a single storage unit or the amount of energy would be the same (e.g. around 7 MJ) or that the amount of energy would be smaller, depending on the particular type of supercapacitors used.

## Claims

1. Assembly of supercapacitors, with supercapacitors organized in vertical columns and in several rows, wherein
supercapacitors are assembled into two sets of vertical columns and in several rows, that is right-side set and left-side set, where these sets are arranged on a supporting frame, having front and back, with supercapacitors from one set being situated with their front face with positive and negative connections facing away from supercapacitors from the other set,
each set of supercapacitors comprises twenty supercapacitors arranged into five vertical columns and four rows,
supercapacitors from vertical columns on both sides can be grouped into five consecutive banks, with supercapacitors on both sides from the column that is closest to the front of the support frame constituting bank 1 and supercapacitors on both sides from the column that is closes to the back of the supporting frame constituting bank 5,
each of the bank 1, bank 2, bank 3, bank 4 and bank 5 of supercapacitors is connected to a separate diagnostic equipment,
supercapacitors are connected between each other in series into two separate groups of supercapacitors called strings, wherein
string 1 starts with its' negative terminal on the negative connection of the bottom supercapacitor from bank 1 on the left side, continues upwards through supercapacitors from bank 1 on the left side, further continues by connecting the uppermost supercapacitor from bank 1 on the left side with the uppermost supercapacitor from bank 2 on the left side, continues downwards through supercapacitors from bank 2 on the left side, further continues by connecting the bottom supercapacitor from bank 2 on the left side with the bottom supercapacitor from bank 2 on the right side, continues upwards through supercapacitors from bank 2 on the right side, further continues by connecting the uppermost supercapacitor from bank 2 on the right side with the uppermost supercapacitor from bank 4 on the right side, continues downwards through supercapacitors from bank 4 on the right side, further continues by connecting the bottom supercapacitor from bank 4 on the right side with the bottom supercapacitor from bank 4 on the left side, continues upwards through supercapacitors from bank 4 on the left side, and ends with its' positive terminal on the positive connection of the uppermost supercapacitor from bank 4 on the left side,
string 2 starts with its' negative terminal on the negative connection of the bottom supercapacitor from bank 1 on the right side, continues upwards through supercapacitors from bank 1 on the right side, further continues by connecting the uppermost supercapacitor from bank 1 on the right side with the uppermost supercapacitor from bank 3 on the right side, continues downwards through supercapacitors from bank 3 on the right side, further continues by connecting the bottom supercapacitor from bank 3 on the right side with the bottom supercapacitor from bank 3 on the left side, continues upwards through supercapacitors from bank 3 on the left side, further continues by connecting the uppermost supercapacitor from bank 3 on the left side with the uppermost supercapacitor from bank 5 on the left side, continues downwards through supercapacitors from bank 5 on the left side, further continues by connecting the bottom supercapacitor from bank 5 on the left side with the bottom supercapacitor from bank 5 on the right side, continues upwards through supercapacitors from bank 5 on the right side, and ends with its' positive terminal on the positive connection of the uppermost supercapacitor from bank 5 on the right side,
wherein both strings are connected in parallel.

2. Assembly of supercapacitors, with supercapacitors organized in vertical columns and in several rows, wherein
supercapacitors are assembled into two sets of vertical columns and in several rows, that is right-side set and left-side set, where these sets are arranged on a supporting frame, having front and back, with supercapacitors from one set being situated with their front face with positive and negative connections facing away from supercapacitors from the other set,
each set of supercapacitors comprises twenty supercapacitors arranged into five vertical columns and four rows,
supercapacitors from vertical columns on both sides can be grouped into five consecutive banks, with supercapacitors on both sides from the column that is closest to the front of the support frame constituting bank 1 and supercapacitors on both sides from the column that is closes to the back of the supporting frame constituting bank 5,
each of the bank 1, bank 2, bank 3, bank 4 and bank 5 of supercapacitors is connected to a separate diagnostic equipment,
supercapacitors are connected between each other in series into two separate groups of supercapacitors called strings, wherein
string 1 starts with its' negative terminal on the negative connection of the bottom supercapacitor from bank 5 on the right side, continues upwards through supercapacitors from bank 5 on the right side, further continues by connecting the uppermost supercapacitor from bank 5 on the right side with the uppermost supercapacitor from bank 4 on the right side, continues downwards through supercapacitors from bank 4 on the right side, further continues by connecting the bottom supercapacitor from bank 4 on the right side with the bottom supercapacitor from bank 4 on the left side, continues upwards through supercapacitors from bank 4 on the left side, further continues by connecting the uppermost supercapacitor from bank 4 on the left side with the uppermost supercapacitor from bank 2 on the left side, continues downwards through supercapacitors from bank 2 on the left side, further continues by connecting the bottom supercapacitor from bank 2 on the left side with the bottom supercapacitor from bank 2 on the right side, continues upwards through supercapacitors from bank 2 on the right side, and ends with its' positive terminal on the positive connection of the uppermost supercapacitor from bank 2 on the right side,
string 2 starts with its' negative terminal on the negative connection of the bottom supercapacitor from bank 5 on the left side, continues upwards through supercapacitors from bank 5 on the left side, further continues by connecting the uppermost supercapacitor from bank 5 on the left side with the uppermost supercapacitor from bank 3 on the left side, continues downwards through supercapacitors from bank 3 on the left side, further continues by connecting the bottom supercapacitor from bank 3 on the left side with the bottom supercapacitor from bank 3 on the right side, continues upwards through supercapacitors from bank 3 on the right side, further continues by connecting the uppermost supercapacitor from bank 3 on the right side with the uppermost supercapacitor from bank 1 on the right side, continues downwards through supercapacitors from bank 1 on the right side, further continues by connecting the bottom supercapacitor from bank 1 on the right side with the bottom supercapacitor from bank 1 on the left side, continues upwards through supercapacitors from bank 1 on the left side, and ends with its' positive terminal on the positive connection of the uppermost supercapacitor from bank 1 on the left side,
wherein both strings are connected in parallel.

3. Assembly of supercapacitors according to claim 1 or 2 **characterized in that** each of the supercapacitors works with voltage around 40V, 50V, 70V, 90V, 105V, 120V or 145V, e.g. 48V.

4. Assembly of supercapacitors according to claim 1, 2 or 3 **characterized in that** total energy stored by supercapacitors is around 7MJ.

5. Energy storage unit comprising assembly of supercapacitors according to any of the preceding claims 1, 2 3 or 4.
